# EUROPÄISCHE PATENTSCHRIFT

(11) **EP 0 530 528 B1**
(45) Veröffentlichungstag und Bekanntmachung des Hinweises auf die Patenterteilung: **15.02.1995**
(21) Anmeldenummer: 92113400.3
(22) Anmeldetag: 06.08.1992
(51) Int. Cl.: B24D 18/00

(54) **Schleifwerkzeug**
Grinding tool
Outil de meulage

(30) Priorität: 05.09.1991 DE 4129486
(43) Veröffentlichungstag der Anmeldung: 10.03.1993
(73) Patentinhaber: Kapp GmbH & Co. KG Werkzeugmaschinenfabrik, D-96450 Coburg (DE)
(72) Erfinder: Pickert, Werner, Dipl.-Ing.(FH), W-8630 Coburg (DE); Lösch, Klaus, Dr.rer.nat., W-8630 Coburg (DE)
(74) Vertreter: Stenger, Watzke & Ring Patentanwälte

(56) Entgegenhaltungen:
- EP-A- 0 090 274
- EP-A- 0 393 540
- PATENT ABSTRACTS OF JAPAN vol. 7, no. 221 (M-246)(1366) 30. September 1983 & JP-A-58 114 863 (TOKYO DENKI KAGAKU KOGYO K.K.)

## Beschreibung

Die Erfindung betrifft ein einschichtig belegtes Formschleifwerkzeug mit auf einem Grundkörper galvanisch gebundenen Schleifkörnern, aus hochfestem Material, vorzugsweise Diamant, CBN oder dergleichen.

Bei der Herstellung qualitativ hochwertiger Bauteile, wie beispielsweise von Zahnrädern und anderen Werkstücken mit speziellen Profilen, wird es immer wichtiger, zwecks Erlangung einer hohen Präzision und Formgenauigkeit, nach dem Vorbearbeiten und dem Härten eine Feinbearbeitung nachzuschalten. Als Hartbearbeitungsverfahren kommt dabei häufig das Schleifen zum Einsatz.

Bei der Hartbearbeitung durch sogenanntes Formschleifen wird dabei ein Werkzeug (Schleifscheibe) eingesetzt, das im Falle des Schleifens von Verzahnungen ein Profil aufweist, das demjenigen der zu schleifenden Zahnlücke entspricht. Als Schneidwerkstoff des Schleifwerkzeugs wird bei modernen Hartbearbeitungsverfahren Diamant, kubisch-kristallines Bornitrid (CBN) oder ein anderes hochfestes Material eingesetzt.

Das Schleifscheibenprofil wird klassisch dadurch erzeugt, daß das Schleifwerkzeug einem Abrichtvorgang unterzogen wird, bei dem beispielsweise mit einer Diamantabrichtrolle das Schleifwerkzeug profiliert wird. Neuartige Schleifverfahren bedienen sich dagegen eines Schleifwerkzeugs, das aus einem auf Profil geschliffenen Grundkörper besteht, der einschichtig mit einer Lage Schleifkörner belegt ist. Die Fixierung der Schleifkörner auf dem Grundkörper wird durch einen galvanischen Prozeß bewerkstelligt, wobei üblicherweise Nickel als Bindematerial verwendet wird. Sofern CBN als Schleifwerkstoff eingesetzt wird, liegt der durchschnittliche Durchmesser eines Schleifkorns - abhängig von der Schleifaufgabe - typischerweise zwischen 20 und 600 »m.

Normalerweise ist die zu beschichtende Oberfläche des Grundkörpers völlig eben, so daß sich diese mit den einlagig darauf angeordneten galvanisch gebundenen Schleifkörnern wie die Oberfläche eines feinkörnigen Schleifpapiers präsentiert. Bei der US-PS 4 114 322 und der DE-OS 27 58 285 wird der Grundkörper jedoch mit einer Vielzahl von Nuten versehen, die unter anderem dazu dienen sollen, das für das Schleifen erforderliche Kühlschmieröl besser an die Schleifstelle zu transportieren.

Bei dem bekannten Stand der Technik geht man davon aus, daß zumindest segmentweise Schleifscheibenbereiche geschaffen werden, die sich - unter dem Mikroskop betrachtet - dadurch ausweisen, daß sich eine Vielzahl von Schleifkörnern nebeneinander galvanisch gebunden auf dem Grundkörper befinden und so eine Schleiffläche bilden. Mithin existieren also stets zumindest "Inseln" oder Segmente, die die klassische Struktur einer Schleifscheibenoberfläche aufweisen.

Ist ein derartiges Schleifwerkzeug im Einsatz, findet ein Zerspanungsvorgang mit geometrisch unbestimmter Schneide statt, d.h. die einzelnen Schleifkörner nehmen von der Oberfläche des zu bearbeitenden Werkstücks Mikrospäne ab, die sich im vor einem Korn befindlichen Spanraum (= Raum bis zum nächsten Schleifkorn) befinden, bevor sie vom Kühlschmiermittel ausgeschwemmt werden oder im Falle des Trockenschliffs durch die Zentrifugalkräfte an der Oberfläche des Schleifwerkzeugs weggeschleudert werden.

Bei den bekannten Schleifwerkzeugen wird dabei stets akzeptiert, daß sich der für ein effizientes Wirken des Zerspanungsprozesses erforderliche Spanraum statistisch ergibt, daß er sich also im Verlauf der galvanischen Fixierungsprozesses der Schleifkörner auf dem Grundkörper zufällig ausbildet.

Untersuchungen mit galvanisch gebundenen Schleifscheiben haben jedoch gezeigt, daß es von der Vielzahl der auf dem Grundkörper aufgebrachten Schleifkörner nur einige wenige "exponierte" Körner sind, die den Zerspanungsvorgang im wesentlichen vornehmen, und daß der diesen Schleifkörnern zugehörige Spanraum von entscheidender Bedeutung für eine hohe Standzeit des Werkzeugs ist.

Der Erfindung liegt daher die Aufgabe zugrunde, ein einschichtig belegtes Formschleifwerkzeug mit auf einem Grundkörper galvanisch gebundenen Schleifkörnern zu schaffen, das sich gegenüber den bekannten Werkzeugen dadurch auszeichnet, daß es eine höhere Standzeit aufweist und einen effizienteren Schleifprozeß ermöglicht; es soll also ein Werkzeug geschaffen werden, mit dem, eine große Anzahl von Werkstücken mit einem hohen bezogenen Zeitspanvolumen (Zahl der abgenommenen Kubikmillimeter Schleifaufmaß pro Sekunde Schleifzeit und pro Millimeter Schleifscheibenbreite) gefertigt wird.

Die Lösung dieser Aufgabenstellung durch die Erfindung ist dadurch gekennzeichnet, daß auf dem die Form erzeugenden Arbeitsbereich des Werkzeugs in Umfangsrichtung in definiertem Abstand angeordnete Schleifkorn-Fronten ausgebildet sind, deren Breite kleiner als der vierfache Korndurchmesser der Schleifkörner ist.

Dadurch, daß im Gegensatz zu den bekannten Schleifwerkzeugen nun nicht mehr zumindest segmentweise Schleifflächen mit einer Vielzahl nebeneinander angeordneten Schleifkörnern existieren, sondern definierte Schleifkorn-Fronten, ist sichergestellt, daß sich vornehmlich nur noch effektiv zum Einsatz kommende Schleifkörner auf der Oberfläche des Grundkörpers befinden. Vor den Schleifkörnern - in Umfangsrichtung gesehen - befinden sich nunmehr dadurch, daß keine weiteren Schleifkörner galvanisch gebunden sind, große Spanräume, die einen optimalen Zerspanungsprozeß zulassen.

Die Ausrichtung der Schleifkorn-Fronten - egal, ob nun jeweils nur eine Kornreihe aufgebracht ist oder ob die Schleifkorn-Front jeweils bis zu 4 Korndurchmesser breit ist - erfolgt bevorzugt in geradliniger Weise radial über die Oberfläche des Grundkörpers. Nach einem weiteren Merkmal der Erfindung ist jedoch auch vorgesehen, daß die Schleifkorn-Fronten zwar geradlinig verlaufen, mit der radialen Richtung jedoch einen spitzen Winkel einschließen.

Andererseits kann es vorteilhaft sein, daß die Schleifkorn-Fronten nicht gerade sind, sondern eine gekrümmte Bahn beschreiben, beispielsweise eine bogenförmige Kurve.

Der Abstand der einzelnen Schleifkorn-Fronten in Umfangsrichtung ist abhängig von der Art des zu schleifenden Werkstückmaterials, von der Werkstückhärte und von der Umfangsgeschwindigkeit, mit der das Schleifwerkzeug arbeitet. Vorzugsweise beträgt der Abstand zwischen zwei Fronten ca. 1,0 - 6,0 mm.

In der Zeichnung sind Ausführungsbeispiele des erfindungsgemäßen Werkzeugs schematisch dargestellt; es zeigt:

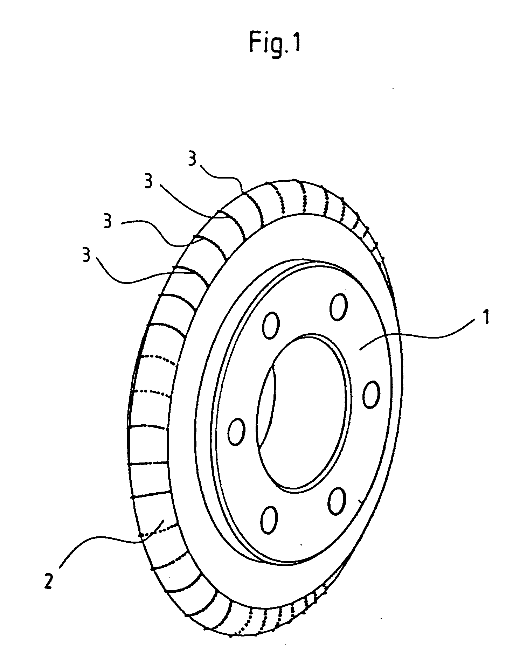

- Fig. 1: eine perspektivische Darstellung einer Schleifscheibe,
- Fig. 2: einen vergrößert dargestellten Ausschnitt des Arbeitsbereiches einer Schleifscheibe mit einreihiger Ausbildung der Schleifkorn-Fronten,
- Fig. 3: einen der Fig. 2 entsprechenden Ausschnitt mit dreireihiger Ausbildung der Schleifkorn-Fronten,
- Fig. 4: einen weiteren Ausschnitt des Arbeitsbereiches einer Schleifscheibe mit gerader und radialer Ausrichtung der Schleifkorn-Front,
- Fig. 5: eine der Fig. 4 entsprechende Darstellung mit einer unter einem spitzen Winkel zur Radiusrichtung verlaufenden Schleifkorn-Front,
- Fig. 6: eine weitere Darstellung mit bogenförmigem Verlauf der Schleifkorn-Front und
- Fig. 7: eine auf einer anderen Linie verlaufende Schleifkorn-Front-Ausbildung.

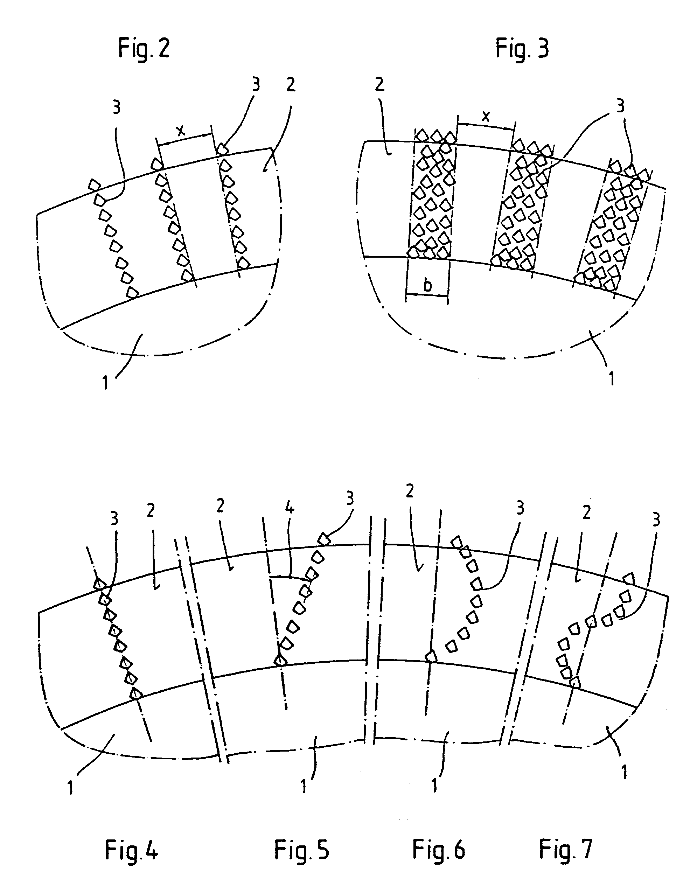

Das Formschleifwerkzeug besteht aus einem Grundkörper 1, der in seinem Arbeitsbereich 2, mit dem das zu schleifende Profil gefertigt werden soll, bereits exakt auf Profil gebracht wurde. Als Schneidmaterial wird Diamant, CBN oder ein anderes hochfestes Material eingesetzt, das in Form von Schleifkorn-Fronten 3 galvanisch auf dem Arbeitsbereich 2 des Grundkörpers 1 aufgebracht wird. Eine Schleifkorn-Front 3 besteht entweder aus einer oder aus mehreren Kornreihen, siehe Fig. 2 bzw. 3. Der Abstand x zwischen zwei aufeinanderfolgenden Schleifkorn-Fronten 3 beträgt vorzugsweise 1,0 bis 6,0 mm. Die Breite b einer Schleifkorn-Front 3 ist kleiner als der vierfache Korndurchmesser.

Die Schleifkorn-Fronten 3 sind entweder radial angeordnet (Fig. 2,3 und 4); sie können aber auch einen spitzen Winkel 4 mit der Radiusrichtung einschließen (Fig. 5). Neben einer geraden Anordnung der Schleifkorn-Fronten 3 ist auch eine bogenförmige Anordnung (Fig. 6) oder eine Anordnung auf einer anderen Linie (Fig. 7) möglich.

Durch den Ersatz der bisher vollflächigen Belegung des Arbeitsbereiches 2 des Grundkörpers 1 durch im definierten Abstand zueinander verlaufende Schleifkorn-Fronten 3 ergeben sich nicht nur gezielt erzeugte und über den Umfang des Schleifwerkzeuges entsprechend der jeweiligen Schleifaufgabe verteilte Schneidkanten, sondern auch diesen Schneidkanten definiert zugeordnete Spanräume. Die Schneidkanten bewirken einen besser definierbaren Schnittvorgang. Die ebenfalls gezielt geschaffenen Spanräume vermeiden nicht nur Aquaplaningeffekte beim Einsatz von Schneidöl, sondern ermöglichen auch einen effizienteren Spanabtrag.

### Bezugszeichenliste:

- 1: Grundkörper
- 2: Arbeitsbereich
- 3: Schleifkorn-Front
- 4: Winkel
- x: Abstand zwischen zwei Schleifkorn-Fronten
- b: Breite einer Schleifkorn-Front

## Patentansprüche

1. Einschichtig belegtes Formschleifwerkzeug mit auf einem Grundkörper (1) galvanisch gebundenen Schleifkörnern aus hochfestem Material, vorzugsweise Diamant, CBN oder dergleichen,
**dadurch gekennzeichnet,**
daß auf dem die Form erzeugenden Arbeitsbereich (2) des Werkzeugs in Umfangsrichtung in definiertem Abstand (x) angeordnete Schleifkorn-Fronten (3) ausgebildet sind, deren Breite (b) kleiner als der vierfache Korndurchmesser der Schleifkörner ist.

2. Schleifwerkzeug nach Anspruch 1, dadurch gekennzeichnet, daß die Schleifkorn-Fronten (3) geradlinig ausgebildet sind.

3. Schleifwerkzeug nach Anspruch 1 und 2, dadurch gekennzeichnet, daß die Schleifkorn-Fronten (3) mit der radialen Richtung des Werkzeugs einen spitzen Winkel (4) einschließen.

4. Schleifwerkzeug nach Anspruch 1, dadurch gekennzeichnet, daß die Schleifkorn-Fronten (3) auf einer gekrümmten Bahn verlaufen.

5. Schleifwerkzeug nach einem der Ansprüche 1 bis 4, dadurch gekennzeichnet, daß der Abstand (x) der Schleifkorn-Fronten (3) 1,0 bis 6,0 mm beträgt.

## Claims

1. Single-layer plated form grinding tool with abrasive grits made of ultra hard material, preferably diamond, CBN or similar products, electroplated to a core (1),
characterized in that
fronts (3) of abrasive grits, arranged at a specific interval (x) in the peripheral direction, are formed on the working area (2) of the tool generating the form, the width (b) of these fronts being smaller than the quadruple grit diameter of the abrasive grits.

2. Grinding tool according to Claim 1, characterized in that the fronts (3) of abrasive grits are formed in a straight line.

3. Grinding tool according to Claims 1 and 2, characterized in that the fronts (3) of abrasive grits make an acute angle (4) with the radial direction of the tool.

4. Grinding tool according to Claim 1, characterized in that the fronts (3) of abrasive grits follow a curved path.

5. Grinding tool according to any one of Claims 1 to 4, characterized in that the interval (x) between the fronts (3) of abrasive grits is from 1.0 to 6.0 mm.

## Revendications

1. Outil de rectification de forme à revêtement simple couche, comprenant des grains abrasifs en un matériau à résistance élevée, de préférence du diamant, du nitrure de bore de forme cristallographique cubique ou CBN, ou des matériaux analogues, qui sont liés à un corps de base (1), par dépôt électrolytique, caractérisé en ce que sur la zone de travail (2) de l'outil, engendrant la forme, sont réalisés des fronts de grains abrasifs (3) espacés d'une distance définie (x) en direction périphérique, et dont la largeur (b) est inférieure à quatre fois le diamètre de grain des grains abrasifs.

2. Outil de rectification selon la revendication 1, caractérisé en ce que les fronts de grains abrasifs (3) sont d'une configuration rectiligne.

3. Outil de rectification selon la revendication 1 et 2, caractérisé en ce que les fronts de grains abrasifs (3) forment un angle aigu (4) avec la direction radiale de l'outil.

4. Outil de rectification selon la revendication 1, caractérisé en ce que les fronts de grains abrasifs (3) s'étendent sur une trajectoire courbe.

5. Outil de rectification selon l'une des revendications 1 à 4, caractérisé en ce que la distance (x) entre les fronts de grains abrasifs (3) a une valeur comprise entre 1,0 et 6,0 mm.
